# EUROPÄISCHE PATENTSCHRIFT

(11) **EP 2 724 082 B1**
(45) Veröffentlichungstag und Bekanntmachung des Hinweises auf die Patenterteilung: **09.03.2016**
(21) Anmeldenummer: 12729109.4
(22) Anmeldetag: 20.06.2012
(51) Int. Cl.: F24C 14/00, A47J 27/14, B08B 9/093

(54) **GARGERÄT MIT EINEM TIEGEL UND VERFAHREN ZUR REINIGUNG DES TIEGELS**
COOKING DEVICE HAVING A PAN AND METHOD FOR CLEANING THE PAN
APPAREIL DE CUISSON POURVU D'UNE CUVE ET PROCÉDÉ POUR NETTOYER LA CUVE

(30) Priorität: 23.06.2011 DE 102011105716
(43) Veröffentlichungstag der Anmeldung: 30.04.2014
(73) Patentinhaber: MKN Maschinenfabrik Kurt Neubauer GmbH & Co. KG, 38300 Wolfenbüttel (DE)
(72) Erfinder: HÖRSTER, Kay, 38106 Braunschweig (DE); RUHE, Dirk, 38667 Bad Harzburg (DE); WEBER, Georg, 38321 Denkte (DE); BOCZAGA, Jörg, 38304 Wolfenbüttel (DE)
(74) Vertreter: Strobel, Wolfgang
(86) Internationale Anmeldenummer: PCT/EP2012/061857
(87) Internationale Veröffentlichungsnummer: WO 2012/175564

(56) Entgegenhaltungen:
- EP-A2- 1 275 334
- DE-A1- 10 134 005
- DE-U1-202008 006 364

## Beschreibung

Die vorliegende Erfindung betrifft ein Gargerät mit einem Garraum in einem Innenraum eines Tiegels mit einem verschließbaren Deckel, mit einem Ablauf aus dem Tiegel, mit einer Reinigungsanordnung zur Zufuhr von Reinigungsflüssigkeit in den Tiegel. Sie betrifft ferner ein Verfahren, bei dem der Garraum eines solchen Gargerätes gereinigt wird.

Gargeräte für die Zubereitung von Nahrungsmitteln gibt es in großer Zahl. Hierzu gehören insbesondere im Bereich gewerblicher Großküchenanwendungen auch Gargeräte mit einem Garraum, welcher zugleich den Innenraum eines Tiegels darstellt. Diese tiegel-, pfannen- oder wannenförmigen Garräume in Gargeräten können insbesondere für die Zubereitung von flüssigen, cremigen oder schüttfähigen Nahrungsmitteln vorgesehen werden, also beispielsweise für Suppen, Gulasch, Erbsen und Reis. Es ist ferner möglich, in diesen Tiegeln Speisen wie beispielsweise Rührei zuzubereiten.

Es ist aber auch möglich, in derartigen Gargeräten andere Gerichte oder auch verschiedene Gerichte in mehreren Etagen mit einzustellenden Geräten übereinander zuzubereiten.

Bei entsprechender Größe der Tiegel ist eine relativ große Menge einer Speise oder eines Gerichtes gleichzeitig zubereitbar, sodass derartige Geräte insbesondere in gewerblichen Großküchen, etwa in Kantinen oder Gaststätten mit einem hohen Durchsatz von häufig gleichartigen Speisen oder Gerichten, einsetzbar sind.

Natürlich kann aber auch ein ambitionierter Privathaushalt eine entsprechend dimensionierte und reduzierte Form eines solchen Gargerätes einsetzen.

Wie auch bei anderen Gargeräten müssen auch solche Gargeräte mit Garräumen im Inneren eines Tiegels nach einem entsprechenden Zubereitungsvorgang entsprechend gereinigt werden. Dies geschieht in der Praxis bisher stets manuell. Hierzu wird üblicherweise der Deckel des Tiegels aufgeklappt, damit der Garraum für den Nutzer zugänglich wird. Dann wird eine Handbrause eingesetzt, insbesondere eine Handbrause, die mittels eines Schlauchaufrollsystems etwa wie in der EP 0 937 674 B1 und EP 0 667 312 B1 oder einem anderen Schlauchaufrollsystem arbeitet.

Mittels der Handbrause wird der Garraum mit einer Reinigungsflüssigkeit beaufschlagt. Diese wirkt für einen gewissen Zeitraum ggf. unter Erwärmung ein. Nach einer Einwirkzeit führt der Benutzer eine mechanische Reinigung beispielsweise mit Bürsten durch. Abschließend hat der Benutzer dafür zu sorgen, dass keine Reste des Reinigers im Garraum verbleiben. Zu diesem Zweck, ist die Reinigungsflüssigkeit zu entfernen und der Garraum zu spülen. Dieses Verfahren erfordert einen hohen Arbeitsaufwand und verbraucht große Mengen an Wasser und Reiniger. Es ist die Aufgabe des Nutzers, durch sorgfältige Reinigung aller Ecken seines Garraumes eine vollständige Reinigung herbeizuführen. Mit der Handbrause wird dabei im Allgemeinen eine für solche Reinigungsaufgaben ausgestattete Waschflotte beziehungsweise Reinigungsflüssigkeit eingesetzt.

Die Qualität und Intensität der Reinigung hängt also von dem Engagement des Nutzers ab, ferner auch von seinem Geschick. Darüber hinaus birgt der Reinigungsvorgang auch die Gefahr, dass Spritzer in durchaus erheblichen Mengen über den Rand des Tiegels in die Küche dringen und dort für einen zusätzlichen unerwünschten Verschmutzungsfaktor sorgen.

Bei anderen Arten von Gargeräten gibt es Möglichkeiten, mit denen dem Anwender möglichst viele Arbeitsschritte abgenommen werden. Dazu gehört unter anderem auch die Reinigung der Geräte nach dem Nahrungsmittelzubereitungsprozess.

Für Nahrungsmittelzubereitungsgeräte vom Typ eines Kombidämpfers haben sich beispielsweise Umwälzverfahren bewährt. In der EP 1 717 518 B1 ist ein solches Gargerät mit einem Garraum und einem Garraumablauf für ein Fluid sowie eine automatische Reinigung hierfür beschrieben.

In dem dort beschriebenen Gargerät und dem zugehörigen Verfahren wird ein Umwälzsystem genutzt, das unter Einsatz eines konzentrierten Reinigers eine Reinigungslösung erstellt, die über einen definierten Zeitraum den gesamten Innenraum benetzt. Damit kann bei Nahrungsmittelbehandlungsgeräten wie zum Beispiel Kombidämpfern eine ausgezeichnete Reinigungswirkung erzielt werden. Die EP 1 717 518 B1 nutzt hierfür die Vorteile des Gerätetyps "Kombidämpfer". Kombidämpfer können beispielsweise das in diesen ohnehin vorhandenen Lüfterrad zum gleichmäßigen Verteilen der Waschflotte nutzen. Es ist weiterhin möglich, wie in der EP 1 717 518 B1 beschrieben, einen Siphon als Reservoir der Waschflotte zu verwenden.

Aus der EP 2 273 200 A1 ist der Gedanke bekannt, eine Reinigung über mehrere Wasseranschlüsse vorzunehmen, die alkalisches Wasser beziehungsweise saures Wasser zur Verfügung stellen und mittels unterschiedlicher Arbeitsprogramme dann zur Reinigung nutzen.

Für Nahrungsmittelbehandlungsgeräte mit wannenförmigem Garraum, beispielsweise Kippbratpfannen, sind die vorgenannten Systeme allerdings ungeeignet, da die Verschmutzungen und Speisereste, die üblicherweise im Tiegel verbleiben, die Waschflotte zu schnell verunreinigen. Die Geräte müssten daher mit Baugruppen zur Filterung der Reinigungslösung und einem Reservoir versehen werden. Desweiteren ist dann ein System erforderlich, dass die Reinigungslösung im Innenraum des Gargerätes, also dem Garraum, verteilt.

In der EP 1 275 334 A2, der DE 101 34 005 A1 und der EP 1 297 907 B1 wird für diesen Zweck ein Reinigungsverfahren vorgeschlagen, dass über den Gerätedeckel ein Fluid zuführt. Sprühdüsen und Sprinkler, bei den zuletzt genannten Dokumenten auch Dreh- oder Schwenksprinkler sollen im vorgestellten Verfahren die Reinigungsflüssigkeit verteilen. Desweiteren schlägt die EP 1 297 907 B1 eine Umwälzung mit Filtereinrichtungen und Reservoirs für Reinigungsfluide vor. Ein weiteres im Wesentlichen auf demselben Prinzip basierendes Reinigungsfluidkreislaufsystem wird in der DE 203 12 852 U1 beschrieben.

Dies alles ist sehr aufwändig und kostspielig. Bei den beschriebenen Kreislaufsystemen erweist es sich außerdem als nachteilig, dass die kontinuierliche Benetzung des gesamten Innenraums mit umgewälztem, gefiltertem Fluid schwer zu realisieren ist.

Aufgabe der Erfindung ist es daher, eine einfache und zuverlässige Möglichkeit für eine Reinigung in einem Gargerät vorzuschlagen.

Diese Aufgabe wird bei der Erfindung durch ein Gargerät gemäß Anspruch 1 gelöst.

Durch den Einsatz einer Hochdruckeinrichtung und die geschickte Nutzung der weiteren Merkmale lassen sich für den Fachmann überraschend sämtliche Aufgaben lösen.

An sich sind ihm Reinigungsverfahren, die unter Zuhilfenahme von Hochdruck Innenräume reinigen, in anderem Zusammenhang bekannt. Es geht dabei um halbmanuelle Systeme, bei denen eigenständige Geräte wie zum Beispiel Fassreiniger nacheinander in verschiedene zu reinigenden Innenräume zumindest teilweise eingebracht werden. In der DE 102 08 237 C1 ist ein Zielstrahlreiniger offenbart, der im Vergleich zu besprühenden Verfahren, bei reduzierter Reinigungsflüssigkeitsmenge, eine vergleichbare oder bessere Reinigungswirkung erreicht. Hierfür wird eine Lanze mit einem dreidimensional drehenden Spritzkopf in den zu reinigenden Innenraum eingeführt. Ein weiterer Zielstrahlreiniger ähnlichen Typs insbesondere für die Medizintechnik und die pharmazeutische und chemische Industrie wird in der DE 20 2008 006 364 U1 beschrieben. Für die Reinigung von Gargeräten sind derartige Zielstrahlreiniger nicht vorgesehen und auch nicht ausgestattet.

Gargeräte mit einem Garraum in einem Innenraum eines Tiegels besitzen allerdings nicht die Möglichkeit, dass bei ihnen ähnlich wie bei Tanks oder Fässern durch eine Öffnung eine derartige Reinigungslanze eingeführt wird. Die einzige zur Verfügung stehende Öffnung ist die Öffnung, die durch das Öffnen des Deckels entsteht. Dann aber entstehen die gleichen Probleme, wie schon herkömmlich bei einer manuellen Reinigung mit einer Handbrause. Durch die Verwendung der Hochdruckeinrichtung würde sich sogar die Neigung zum Überspritzen noch deutlich verstärken, was dem Fachmann sofort einleuchtet und ihn daher zwangsläufig zu der Erkenntnis bringt, derartige Hochdruckeinrichtungen seien beispielsweise für Kippbratpfannen ungeeignet.

Durch die Erfindung wird jedoch dieses Vorurteil überwunden. Es wird nämlich von dem Effekt Gebrauch gemacht, dass anders als etwa bei Kombidämpfern mit ihren Lüfterrädern und anderen Einbauten bei einem Gargerät alle Stellen des Garraums frei zugänglich sind. Insbesondere sind keine Hinterschnitte oder andere verdeckte, zu reinigende Stellen vorhanden. Das führt zu der überraschenden Erkenntnis, dass gemäß dem sogenannten Sinnerschen Kreis, statt der üblicherweise bei Nahrungsmittelbehandlungsgeräten eingesetzten Reinigung auf der Basis von hoch konzentrierten Reinigungsmitteln (Chemie), der Einsatz der Mechanik erfolgreich ist.

Besonders bevorzugt ist dabei vorgesehen, dass der drehbare Kopf mit seiner beziehungsweise seinen Düsenöffnungen als Orbitalkopf ausgebildet ist.

Als Orbitalkopf wird ein Zielstrahlreiniger bezeichnet, bei dem eine oder mehrere Düsen um eine Achse rotieren, wobei diese Achse senkrecht auf einer weiteren Drehachse steht. Eine geeignete Getriebekombination verhindert dabei ein Überdecken der jeweils erzeugten Strahlspuren, hier also der Spuren der vom Orbitalkopf während des Drehens erzeugten Spuren der Reinigungsflüssigkeit. Die Getriebekombination führt auf diese Weise zu einem feinmaschigen Spurbild.

Ein Orbitalkopf hat mithin noch ganz andere Möglichkeiten, als ein Kopf mit Düsen, der zwar mit Hochdruck arbeitet, jedoch lediglich Drehbewegungen um eine Achse oder Schwenkbewegungen ausführen kann. Der Orbitalkopf ist tatsächlich in der Lage, alle Bereiche eines Tiegels zu überstreichen und somit einen wesentlich gleichförmigeren Reinigungsvorgang herbeizuführen.

Gemäß einer nicht erfindungsgemäßen Variante kann der drehbare Kopf so aufgebaut und angeordnet sein, dass die mittels der Hochdruckeinrichtung zugeführte strömende Reinigungsflüssigkeit eine mechanische, die Drehung des Kopfes bewirkende Kraft ausübt.

Bei dieser Variante erfolgt der Antrieb der Drehbewegung mittels Wasserkraft. Das bedeutet allerdings, dass die antreibende Kraft durch die Pumpenleistung der Hochdruckeinrichtung aufgebracht werden muss.

Das Gargerät arbeitet mit einem separaten Motor zur Erzeugung der Drehbewegung. Dabei wird vorgesehen, den Motor außerhalb des Garraums in der Wandung anzuordnen und mittels einer Übertragungskette die mechanische Energie für die Drehbewegung in die Lanze übermittelt, die den Kopf, insbesondere den Orbitalkopf, antreibt. Dies hat den Vorteil, dass in dem Kopf kein Platzbedarf für einen Motor und auch nicht für die Umsetzung der Wasserkraft in eine Drehbewegung benötigt wird.

Durch die Erfindung wird es möglich, die aufgezeigten Probleme zu lösen und eine automatische Reinigung von Gargeräten mit tiegelförmigem Garraum anzubieten. Es wird ein Verfahren und zugehöriges Gerät beschrieben, dass die zur Verfügung stehenden Parameter einsetzt. Dazu gehören insbesondere die Komponenten Mechanik, Temperatur und Zeit. Der Einsatz chemischer Reiniger kann außerdem vorteilhaft reduziert oder bei nicht sehr stark verschmutzten Garräumen vermieden werden.

Mit Nutzen verwendet werden kann auch die in dem Gargerät ohnehin unmittelbar benachbart zum Garraum angeordnete Heizung, die bestimmungsgemäß zur Zubereitung von Speisen im Garraum dient, aber natürlich auch eine Reinigungsflüssigkeit, insbesondere also Wasser, während des Reinigungsvorganges erwärmen kann.

Auf diese Weise kann die durch die Hochdruckeinrichtung und die Düsen in dem Kopf, insbesondere dem Orbitalkopf, erzeugte Flüssigkeitsströmung relativ zu den Wänden, dem Boden und dem Deckel genutzt und mit der durch die Heizung zur Verfügung gestellte Temperatureinwirkung auf diese Flüssigkeit kombiniert werden.

Die Heizung kann zusätzlich auch für einen Trocknungsvorgang nach der Reinigung eingesetzt werden, um also die Reste der Reinigungsflüssigkeit zu verdampfen.

Von besonderem Vorteil ist es, wenn der Reinigungskopf beziehungsweise die Reinigungslanze werkzeuglos angebracht und wieder abgenommen werden kann. Dies führt insbesondere zu einem Zeitgewinn, da das Werkzeug weder gesucht und herangebracht noch nach der Nutzung wieder abgelegt werden muss.

Ein entsprechender Montageflansch zum Befestigen der Lanze mit dem Kopf, insbesondere dem Orbitalkopf, für die Reinigungsflüssigkeit, kann fest installiert werden und somit Bestandteil des Tiegel des Gargerätes sein.

Es ist auch möglich, dass dieser Flansch separierbar oder als nachträglich in bestehende Tiegel von Gargeräten installierbares Element ausgebildet ist.

Die Lanze endet bevorzugt in der Rückwand des Tiegels in einer Kupplung.
Es gibt verschiedene Möglichkeiten, ein gleichwohl gewünschtes Reinigerkonzentrat in die Reinigungsflüssigkeit einzubringen. So ist es beispielsweise möglich, dass ein Nutzer ein Reinigerkonzentrat in den Kupplungsbereich der Reinigungslanze beim Anbringen einsetzt. Es wird also der Moment genutzt, in dem ohnehin die Reinigungslanze beziehungsweise der Reinigungskopf noch nicht aufgesetzt ist, um das Reinigerkonzentrat in den Reinigungsflüssigkeitskreislauf einzuführen.

Das Reinigerkonzentrat wird dann nach dem Zusammensetzen aller Elemente der Flüssigkeit ausgesetzt, löst sich auf und kann dadurch in den Garraum eingesprüht werden.

Dabei ist es auch möglich, das Reinigerkonzentrat in Form einer Kartusche einzusetzen und diese erst durch den Hochdruck öffnen zu lassen, mit der das Wasser eingesprüht werden soll. Hierbei kann beispielsweise ein Sollbruchstelle eingedrückt werden.

Möglich ist es auch, eine Reinigungslösung mittels einer Injektion entweder in diesen Kupplungsbereich oder direkt in den Reinigungskopf oder die Reinigungslanze einzubringen.

Praktisch am einfachsten wäre es, die Reinigungslösung oder das Reinigerkonzentrat direkt einem Flüssigkeitsreservoir zuzuführen, aus dem anschließend die Reinigungsanordnung sich bedient.

In einer bevorzugten Ausführungsform ist ferner ein Reservoir für eine Fluidzwischenspeicherung vorgesehen. Auf diese Weise kann ausgeschlossen werden, dass Trinkwasser aus dem Leitungsnetz verunreinigt wird.

Von besonderem Vorteil ist auch, dass alle Zuleitungen für die Reinigungsflüssigkeit und auch der Ablauf und die vom Ablauf wegführenden Leitungen in Bereichen verlegt werden können, die wenig anspruchsvoll sind. Im Seitenraum neben dem Garraum ist üblicherweise Platz und es kann vermieden werden, dass die Zuleitungen und Ableitungen behindernd gegenüber einem Kippmechanismus wirken, der meist bei derartigen Gargeräten mit einem Garaum im Innenraum eines Tiegels benötigt wird, um die Speisen aus dem Garraum herauszunehmen.

In einer bevorzugten Ausführungsform der Erfindung wird eine weitere Optimierung des Reinigungsergebnisses erreicht. Es werden einer oder mehrere Sensoren im Garraum angeordnet, und zwar bevorzugt an für den Reinigungsvorgang kritischen Stellen beziehungsweise an Positionen, die eine Beurteilung des Reinigungsvorganges an kritischen Stellen ermöglichen.

Die Sensoren können unterschiedliche Werte aufnehmen, wobei insbesondere eine optische Beobachtung durch die Sensoren gute Ergebnisse liefert.

Dabei kann mit Nutzen eine Kamera eingesetzt werden, die zugleich auch während des Garrvorganges eingesetzt werden kann, um Angaben etwa zur Siedestärke zu ermitteln und dem Nutzer des Gargerätes weiterzugeben. Diese Kamera oder aber auch eine andere Möglichkeit eines optischen Sensors kann nun während des Reinigungsvorganges einschätzen, ob beziehungsweise welche Schmutzreste beziehungsweise Nahrungsmittelreste sich noch an einer kritischen Stelle des Garraums befinden und kann dieses Ergebnis für eine Rückkopplung auf den Reinigungsprozessnutzung, etwa über eine Gerätesteuerung

Auf diese Weise kann die Reinigungszeit optimiert werden, ebenso auch die Energiebilanz, der Wasserverbrauch und auch der Reinigungsmittelverbrauch.

Ein Verfahren zum Reinigen des Garrraums eines Gargerätes sieht insbesondere vor, dass Substanzen auf den Wänden, dem Boden und der Innenseite des Deckels mittels eines Flüssigkeitsstrahls unter Hochdruck aus dem Kopf mechanisch abgetragen werden.

Eine derartige Kurzreinigung hat den großen Vorteil, mit geringem Zeitaufwand zwischen mehreren Garvorgängen eine weitgehend komplette Reinigung durchzuführen. Dies ist nur durch die erfindungsgemäße Verwendung von Hochdruck möglich, also unter perfekter Ausnutzung des Sinnerschen Kreises.

Eine derartige rein mechanische Kurzreinigung erzielt überraschenderweise in vielen Fällen eine ausreichende und zufriedenstellende Reinigungswirkung, wie Tests bereits gezeigt haben.

Ein Beispiel ist etwa folgende Vorgehensweise: Ein Fisch wird in dem Garraum gebraten. Anschließend erfolgt eine mechanische Kurzreinigung, wie vorstehend beschrieben von etwa zwei Minuten Dauer. Danach wird in dem gleichen Garraum ohne jede Beeinträchtigung Milch gekocht.

Eine vollständige Reinigung mit größerer Intensität muss dann nur noch in Abständen oder in besonderen Fällen durchgeführt werden. Diese kann mit besonderem Vorteil durchgeführt werden, wenn ein Verfahren zum Reinigen des Garraums eines Gargerätes mit folgenden Schritten durchgeführt wird:
a) Anlösen, insbesondere Einsprühen, des Gärraums mit einer Flüssigkeit aus dem Kopf,
b) Einwirken lassen der Flüssigkeit auf den Wänden, dem Boden und der Unterseite des Deckels des Garraums,
c) mechanisches Abtragen der Substanzen auf den Wänden, dem Boden und der Innenseite des Deckels mittels eines Flüssigkeitsstrahls unter Hochdruck aus dem Kopf, und
d) Klarspülen, insbesondere durch Beaufschlagen der Wandungen des Garraumes mit Frischwasser für eine vorgegebene Zeitspanne.

Derartige Verfahren können sehr zeitsparend auch zwischen mehreren Koch- oder Zubereitungsvorgängeln durchgeführt werden. Durch die Verwendung des Hochdruckreinigers und insbesondere eines Orbitalkopfes, der den Innenraum beziehungsweise Garraum gleichmäßig überstreicht, lässt sich besonders rasch der Garraum reinigen, insbesondere zuverlässiger als bei einer manuellen Reinigung. Ein Orbitalkopf lässt sich mit seinen Bewegungen sauber über bestimmte Bahnen steuern, sodass er gleichmäßig während des Reinigungsvorganges völlig automatisch alle zur Verfügung stehenden Flächen überstreicht.

Mit einem solchen Orbitalkopf lassen sich dichte Spuren eines Hochdruck-Flüssigkeitsstrahls legen. In der Verlängerung der Achse der erwähnten Reinigungslanze entsteht konzeptionsbedingt eine Art Spurschatten. Dieser Spurschatten kann durch geschicktes Legen und Anordnen der Reinigungslanze bevorzugt so gelegt werden, dass er den Dichtungsbereich zwischen dem Deckel und der Oberkante des Garraumes belegt, sodass dieser weniger besprüht wird.

In diesem Bereich ist eine Reinigung nicht beziehungsweise weniger erforderlich, da hier ohnehin das Ausgießen der Speisen erfolgt und dieser Bereich durch den Nutzer im Regelfall ohnehin systematisch gereinigt wird.

Weiterhin ist es erforderlich, einen weiteren Schritt für den Reinigungsvorgang zu ergänzen, nämlich:
Desinfizieren des Garraums im Tiegel, insbesondere durch Schließen des Ablaufs, anschließendes Einfüllen von Frischwasser, Schließen des evtl. noch offenstehenden Deckels, und Aufheizen des Frischwassers im Garraum mittels einer Heizung des Gargerätes.

Bevorzugt kann darüber hinaus noch vorgesehen werden, dass der gereinigte Garraum getrocknet wird, insbesondere durch Öffnen des Deckels und des Geräteablaufs und Aufheizen des Garraumes.

Im Folgenden wird anhand der Zeichnung ein Ausführungsbeispiel der Erfindung näher erläutert. Es zeigen:
- **Figur 1**: eine perspektivische Darstellung einer Ausführungsform eines erfindungsgemäßen Gargeräte;
- **Figur 2**: einen Schnitt durch die in Figur 1 dargestellte Ausführungsform eines Gargerätes;
- **Figur 3**: ein Detail aus der Ausführungsform der Figur 1 und 2; und
- **Figur 4**: eine perspektivische Darstellung eines entsprechenden Details mit weiteren Elementen.

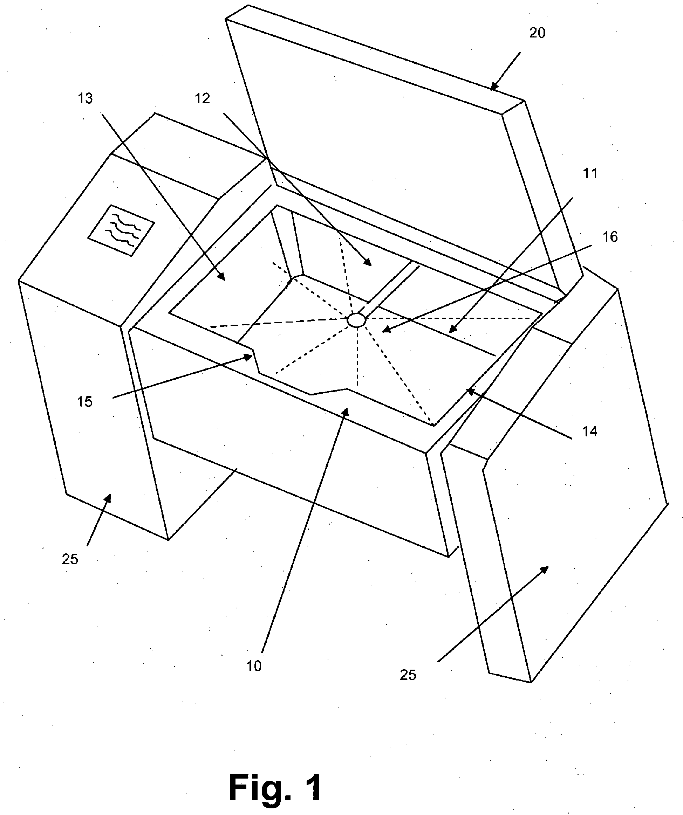

Ein in der **Figur 1** dargestelltes Gargerät besitzt einen Tiegel 10. Der Tiegel 10 ist beispielsweise wannenförmig oder pfannenförmig. Der Tiegel 10 kann sehr unterschiedliche Formen besitzen, beispielsweise halbkugelartig nach Art eines Wok oder kreiszylinderförmig ausgebildet sein. Die dargestellte Ausführungsform dagegen besitzt einen weitgehend flachen oder leicht geneigten Boden 11, von welchem Seitenwände aufragen. In dem dargestellten Ausführungsbeispiel handelt es sich um eine vom Benutzer üblicherweise abgewandte Rückwand 12, zwei an diese angrenzende, etwas kürzere Seitenwände 13 und 14 sowie eine der Rückwand 12 gegenüberliegende und damit dem Benutzer zugewandte Vorderwand 15.

Die Wandung mit den einzelnen Wänden 12, 13, 14, 15 und dem nach unten diese verbindenden Boden 11 umschließen einen Innenraum, der in dem Gargerät zugleich einen Garraum 16 bildet.

In den Wandungen 12, 13, 14, 15 und/oder dem Boden 11 sind entsprechende Heizelemente angeordnet, die den Garraum 16 und seinen Inhalt erwärmen können.

Aufgrund der Wannen-, Pfannen- oder Tiegelform eignet sich das Gargerät insbesondere dazu, in dem Garraum 16 flüssige Speisen wie etwa Suppen, sämige oder cremige Speisen wie etwa Gulasch oder auch Schütt- oder rieselfähige Nahrungsmittel wie Reis, Nudel oder Erbsen zuzubereiten. Ebenso kann in dem Garraum 16 aber beispielsweise auch Rührei zubereitet werden.

Natürlich ist auch die Zubereitung anderer Speisen möglich, auch beispielsweise in mehreren Etagen übereinander, wenn entsprechende Elemente in den Garraum 16 eingestellt werden.

Nach oben ist der Garraum 16 durch einen Deckel 20 verschließbar. Dieser Deckel 20 wird üblicherweise und insbesondere auch in der dargestellten Ausführungsform mit einem Gelenk an der Oberkante der Rückwand 12 angelenkt und kann somit auf- und zugeklappt werden, um geöffnet und verschlossen zu werden.

Auf diese Weise ermöglicht der Deckel 20 eine Zubereitung der Speisen im Garraum 16 bei geschlossenem Deckel 20, also in einem geschlossenen Garraum 16, was sehr häufig erwünscht ist.

In besonders bevorzugten Ausführungsformen kann in einem solchen Garraum 16 sowohl ein Braten wie auch ein Frittieren vorgenommen werden, wenn der Boden 11 etwa als Bratplatte ausgebildet wird. Auch Druckgaren ist ohne Weiteres durch den Deckel 20 möglich, wenn dieser entsprechend fest und abgedichtet verschließbar ist.

Zum Hineingeben der Zutaten und zum Herausnehmen der zubereiteten Speisen kann der Deckel 20 einfach geöffnet werden.

In der Figur 1 ist der Deckel 20 geöffnet dargestellt, sodass man in den Garraum 16 hineinblickt.

Der Tiegel 10 ist so in einem Rahmen 25 ausgehängt, dass er um eine horizontale und parallel zur Vorderwand 15 und Rückwand 12 verlaufende Achse gekippt werden kann. Dies dient dazu, dass Speisen aus dem Garraum 16 nach vorne über die Oberkante der Vorderwand 15 in dort bereitstehende Gefäße abgefüllt und zur weiteren Zubereitung oder auch zur Nutzung transportiert werden können.

In dem Rahmen 25 und/oder in den Wänden 12, 13, 14, 15 und/oder dem Boden 11 sind (nicht dargestellte) Heizelemente vorgesehen, mit denen die Speisen im Garraum 16 erhitzt werden können.

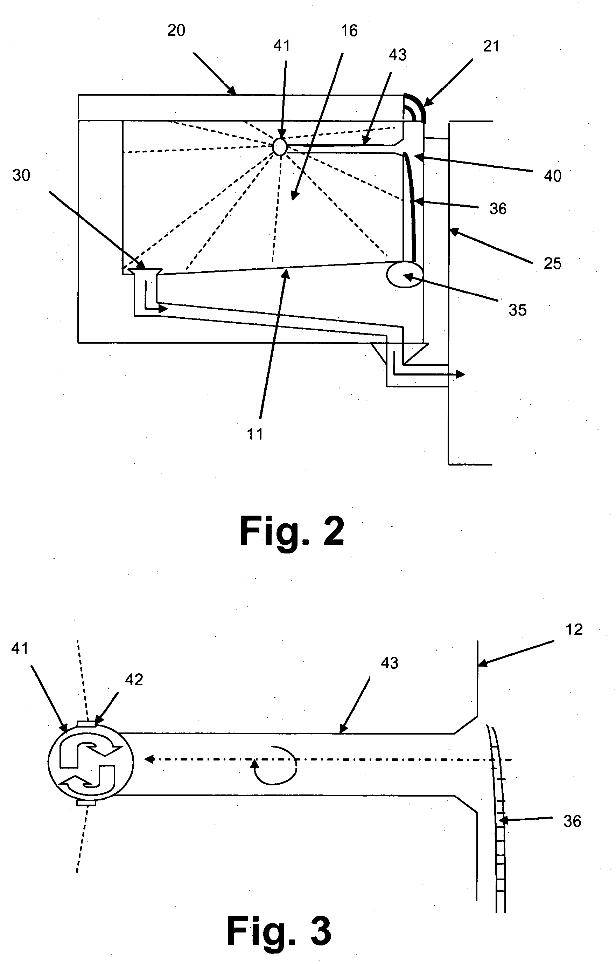

In der **Figur 2** ist das Gargerät aus der Figur 1 in einem Schnitt parallel zu den Seitenwänden 13 und 14 beziehungsweise senkrecht zur Vorderwand 15 dargestellt.

Man sieht hier die Vorderwand 15 links und den Boden 11 unterhalb des Garraums 16 sowie den Deckel 20 in dieser Darstellung anders als in der Figur 1 geschlossen. Der Boden 11 ist in der Figur 2 bewusst leicht schräg dargestellt, um zu zeigen, dass in bestimmten Anwendungsfällen auch ein nicht waagerechter Boden 11 denkbar ist. In den meisten Anwendungsfällen ist der Boden allerdings waagerecht ausgebildet, damit er auch als Bratplatte verwendbar ist. Hierfür gibt es dann auch eine spezielle Betriebsart "Braten".

Lediglich angedeutet in der Figur 2 ist ein Scharnier oder Gelenk 21, welches das Aufklappen und Verschließen des Deckels 20 auf dem Tiegel 10 mit dem Garraum 16 ermöglicht.

Im Boden 11 des Tiegels 10 unterhalb des Garraums 16 ist ein Ablauf 30 angeodnet. Dieser Ablauf 30 dient dazu, nach dem Entnehmen der zubereitete Speisen etwaige Verschmutzungen oder flüssige Überreste aus dem Garraum 16 durch den Boden 11 entfernen zu können.

Der Ablauf 30 ist hier an der tiefsten Stelle des Bodens 11 vorgesehen. Aufgrund des oben beschriebenen Kippmechanismus ist es allerdings denkbar, den Ablauf 30 auch anders anzuordnen. Es kommt insbesondere darauf an, dass etwaige Reste und Flüssigkeiten im Inneren des Garraums 16 tatsächlich gezielt zum Ablauf 30 gefördert werden können.

Vom Ablauf 30 führt eine Leitung in der Figur 2 nach rechts unten, mit welcher Abwasser vom Ablauf 30 zur Entsorgung aus dem Gargerät in den Rahmen 25 oder eine andere Einrichtung geführt werden kann.

Um nach der Zubereitung der Speisen in dem Garraum 16 das Gargerät auch wieder säubern und für den nächsten Zubereitungsvorgang vorbereiten zu können, ist eine Reinigungsanordnung 40 vorgesehen. Diese Reinigungsanordnung kann eine Reinigungsflüssigkeit in den Tiegel 10 hinein zugeben. Diese Reinigungsflüssigkeit besteht aus einem Fluid, insbesondere aus Wasser, dem ein entsprechendes Reinigerkonzentrat für eine Waschflotte oder geeignete andere Zutaten zugesetzt sein können. Nach dem Einführen dieser Reinigungsflüssigkeit in den Garraum 16 (außerhalb des Garvorganges) dient die Reinigungsflüssigkeit dazu, an den Wänden 12, 13, 14, 15, dem Boden 11 und der Unterseite des Deckels 20 anhaftende Reste, Wrasen und dergleichen zu lösen, abzuspülen und dann über den zweckmäßig am tiefsten Punkt des Bodens 11 angeordneten Ablauf 30 aus dem Tiegel 10 zu entfernen.

Die Reinigungsanordnung 40 weist einen drehbaren Kopf 41 auf, insbesondere einen Orbitalkopf. Dieser ist mit verschiedenen Düsenöffnungen 42 ausgestattet.

In den Figuren 1 und 2 kann man erkennen, dass der drehbare Kopf 41 am Ende einer Lanze 43 angeordnet ist. Die Lanze 43 wird in eine vorbereitete Öffnung in der Rückwand 12 bei Bedarf eingesteckt. Diese vorbereitete Öffnung steht in Kontakt mit der Zufuhrleitung (nicht dargestellt), mit der Reinigungsflüssigkeit innerhalb der Reinigungsanordnung 40 durch die Rückwand 12 in die Lanze 43 und dort zum drehbaren Kopf 41 geführt wird.

Die Lanze 43 endet in einer Kupplung oder in anderer geeigneter Form in der Rückwand 12 des Tiegels 10. Die Reinigungsanordnung 40 umfasst die Lanze 43 und ragt daher mit der Zuführanordnung in Form eines Schlauches oder Rohres durch die Rückwand 12 hindurch weiter bis zu einem (nicht dargestellten) Flüssigkeitsreservoir.

Die Lanze 43 ist mittig in der Rückwand 12 und zwar relativ dicht an deren oberen Kante angeordnet, etwa in dem Bereich zwischen einem Sechstel und einem Drittel der Höhe der Rückwand 12 unterhalb des Deckels 20.

Die Reinigungsflüssigkeit wird mit Hochdruck durch die Rückwand 12 in die Lanze 43 gefördert und dieser Druck der strömenden Flüssigkeit übt eine mechanische, den drehbaren Kopf 41 drehende Kraft aus. Der Kopf 41 dreht sich und die aus den Düsenöffnungen 42 heraustretende Flüssigkeit wird in Bahnen auf die Wände, den Boden und die Unterseite des Deckels 20 um den Garrraum 16 herum gesprüht.

In einer alternativen Ausführungsform wird die Drehung des Kopfes 41 durch einen Motor 35 erzeugt, der über eine Übertragungskette 36 mechanische Kraft und Energie aus einem Bereich hinter einem der Wände 12, 13, 14, 115 oder unterhalb des Bodens 11 durch die Lanze 43 in den Kopf 41 übermittelt.

Bei Orbitalköpfen ist es möglich, den genauen Verlauf der Bahnen so zu legen, dass diese jeweils dicht aneinander und nacheinander passiert werden, sodass praktisch der gesamte überstreichbare Flächenbereich auch überstrichen wird, und zwar gleichmäßig.

Hierzu ist es möglich, mittels eines Sensors die aktuelle Position des Strahls der Reinigungsflüssigkeit zu erkennen. Aus dieser Erkennung wiederum kann eine Steuerung automatisch generieren, dass weiter vom Zentrum entfernte Flächenbereiche des Garraums zeitlich länger mit dem Hochdruckstrahl der Reinigungsflüssigkeit beaufschlagt werden.

Die Lanze 43 wird während des Zubereitungsvorgangs der Speisen selbstverständlich aus der Rückwand 12 entnommen und durch einen Blindstopfen (nicht dargestellt) ersetzt. Das bedeutet, dass der Zubereitungsvorgang nicht in irgendeiner Form behindert wird. Die Lanze 43 wird lediglich dann eingesteckt, wenn sie benötigt wird, also während des Reinigungsvorgangs.

Bevorzugt wird eine werkzeuglose Befestigung der Lanze 43 in der vorgesehenen Öffnung in der Rückwand 12 vorgenommen, etwa in Form einer bajonettartigen Verbindung der Lanze 43 mit der Rückwand 12.

Der Kopf 41 ist so angeordnet, dass die Abstände der Wände, der Decke und des Bodens von den Düsen 42 des Kopfes 41 etwa in der gleichen Größenordnung liegen. Aufgrund der Form des Garraums 10 ist der Abstand selbstverständlich nicht exakt gleich, denn die Ecken des Garraums 10 beziehungsweise des Tiegels sind vom Kopf 41 weiter entfernt, als die unmittelbar gegenüberliegenden Bereiche der Wände.

Durch eine Variation der Übersetzung beim Antrieb des Kopfes 41 oder auch durch eine Variation der Anzahl der Düsen kann die Auflösung, also die Überdeckung oder Maschenweite, der Reinigungsstrahlen den Wünschen angepasst werden. Dabei geht es in erster Linie auch um die geometrischen Gegebenheiten des Tiegels. Auf jede Tiegelform und jede Tiegelgröße kann eine optimierte Form der Reinigung mittels des Kopfes 41 eingestellt werden.

Auf diese Weise wird auch die Zeit optimiert, die für den Reinigungsvorgang benötigt oder im anderen Zusammenhang für wünschenswert gehalten wird.

Durch eine Änderung der Umdrehungsgeschwindigkeit des Kopfes 41 mit den Düsen 42 kann auch die Impact-Zeit des Hochdruckreinigungsstrahls der jeweiligen Zielposition im Tiegel angepasst werden. Der Hintergedanke bei dieser Einstellung liegt darin, dass Tiegelwände benachbart oder näher am Kopf 41 gelegen nur kurz beaufschlagt werden sollten, während weiter entfernt liegende Ecken, Kanten oder Wende länger beaufschlagt werden sollten, da sie weiter vom Kopf 41 entfernt sind und somit bereits eine Auffächerung des Strahles stattgefunden hat.

Eine Verfeinerung der Strahlmaschen kann auch durch eine kontinuierliche Variation der Getriebeübersetzung erfolgen, um weit vom Kopf 41 entfernt liegende Ecken oder Wände mit möglichst eng aneinander liegenden Reinigungsbahnen zu beaufschlagen.

In der **Figur 3** ist die Lanze 43 vergrößert dargestellt. Man sieht den drehbaren Kopf 41 und zumindest eine Düsenöffnung 42. Angedeutet ist die Zufuhr einer Reinigungsflüssigkeit durch die Rückwand 12 mittels einer strichpunktierten Pfeil-Linie.

Die von dem drehbaren Kopf 41 abgewandte Seite der Lanze 43 ist in einer Verbindung mit einer Flanschverschraubung und einem bajonettartigen Verschluss auf die Rückwand 12 (in der Figur 3 nicht dargestellt) eingesetzt.

Zur Übertragung der den Kopf 41, insbesondere den Orbitalkopf antreibenden Kraft wird eine innere Achse der Lanze 43 in Rotation versetzt. Die Reinigungsflüssigkeit und die Antriebskraft werden aufeinander abgestimmt durch eine Flanschverschraubung die Lanze 43 eingebracht. Der Motor wird insbesondere im Bodenbereich des Tiegels 10 angeordnet und überträgt die Kraft über zwei durch eine Kette verbundene Zahnräder an die Lanze 43.

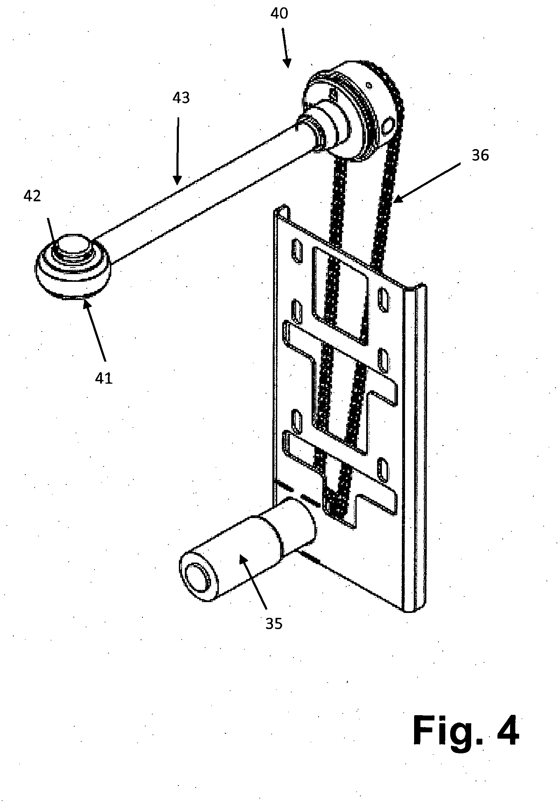

In der **Figur 4** ist die Lanze 43 mit dem Kopf 41 der Reinigungsanordnung 40 und der Übertragungskette 36 in größerem Detail dargestellt.

Man sieht, wie in dem in der Figur 4 unten zu erkennenden Bereich die Durchführung der Reinigungsanordnung 40 durch die Wand 12, 13, 14, 15 des Tiegels 10 in den Garraum 16 vorgenommen wird.

Ein außerhalb des Garraums 16 angeordneter Wasserkasten (nicht dargestellt) führt mittels einer Hochdruckpumpe (ebenfalls nicht dargestellt) über eine Hochdruckschlauchverbindung eine Reinigungsflüssigkeit von außen der Wand 12, 13, 14, 15 des Tiegels 10 zu. Ein Hochdruckmagnetventil für bevorzugt 160 bar entsprechend 16 MPa schließt und öffnet entsprechend die Zufuhr für die Reinigungsflüssigkeit. Ferner ist eine starre Hochdruckvorrohrung vorgesehen.

Man erkennt in der Figur 4 insbesondere, wie der Motor 35, der dort links unten gedacht werden kann, über eine Übertragungskette 36 ein Kettengetriebe antreibt. Das Kettengetriebe arbeitet in der Reihenfolge Zahnrad-Kette-Zahnrad.

Eine Kupplung ist im Verschlussdeckel vorgesehen. Dabei ist tiegelseitig ein Reedsensor zum Erkennen des Verschlussdeckels vorgesehen. Der Verschlussdeckel besitzt verschiedene Detailmerkmale. Er dichtet einen Flansch ab im Falle der Nichtbenutzung der Lanze 43. Dabei ist ein Überdruck von 0,9 bar entsprechend 900 hPa möglich. Darüber hinaus wird die Reinigung deaktiviert. Hierfür kann ein Automatismus vorgesehen sein. Das Gleiche gilt für eine Aktivierung des Garprozesses.

Hieran schließt sich dann die Lanze 43 an, welche einen Kopf 41, insbesondere einen Orbitalkopf, trägt.

Die Lanze 43 steckt in einer Kupplung. Die Kupplung stellt eine Schnittstelle der Lanze 43 einerseits zum Wasser beziehungsweise der Reinigungsflüssigkeit und andererseits zum Drehmoment dar. Die Kupplung dichtet dabei mittels eines O-Ringes einen Hochdruckstrang ab, der für die Zufuhr der Reinigungsflüssigkeit hier eingesetzt wird.

Die Kupplung verhindert darüber hinaus einen Dampfeintritt in das Gehäuse des Tiegels 10, wobei ein Überdruck von 0,9 bar entsprechend 900 hPa möglich beziehungsweise vorgesehen ist. Die Kupplung ermöglicht darüber hinaus eine Drehmomentübertragung.

### Bezugszeichenliste

- 10: Tiegel
- 11: Boden
- 12: Rückwand
- 13: Seitenwand
- 14: Seitenwand
- 15: Vorderwand
- 16: Garraum

- 20: Deckel
- 21: Gelenk
- 25: Rahmen

- 30: Ablauf
- 35: Motor
- 36: Übertragungskette

- 40: Reinigungsanordnung
- 41: drehbarer Kopf
- 42: Düsenöffnung
- 43: Lanze

## Patentansprüche

1. Gargerät,
mit einem Garraum (16) in einem Innenraum eines Tiegels (10), der eine Vorderwand (15), zwei Seitenwände (13, 14) und Rückwand (12) aufweist,
mit einem verschließbaren Deckel (20),
mit einem Ablauf (30) aus dem Tiegel (10), und
mit einer Reinigungsanordnung (40) zur Zufuhr von Reinigungsflüssigkeit in den Tiegel (10),
wobei die Reinigungsanordnung (40) eine Hochdruckeinrichtung zum Einführen der Reinigungsflüssigkeit mit Hochdruck in den Tiegel (10) aufweist, wobei die Reinigungsanordnung (40) durch eine Wandung gebildet aus einer der Wände (12, 13, 14, 15), den Deckel (20) oder einen Boden (11) des Tiegels (10) in den Garraum (16) im Inneren des Tiegels (10) geführt ist, und die Reinigungsanordnung (40) einen drehbaren Kopf (41) mit einer oder mehreren Düsenöffnungen (42) für die Reinigungsflüssigkeit aufweist,
**dadurch gekennzeichnet,**
**dass** ein Motor zum Antrieb des drehbaren Kopfes (41) vorgesehen ist, welcher Motor bevorzugt in der Wandung (12) angeordnet ist und mittels einer Übertragungskette die Antriebskraft in die Lanze (43) übermittelt, welche den Kopf (41) antreibt.

2. Gargerät nach Anspruch 1, **dadurch gekennzeichnet, dass** der drehbare Kopf (41) mit seiner bzw. seinen Düsenöffnungen (42) als Orbitalkopf ausgebildet ist.

3. Gargerät nach Anspruch 1 oder 2, **dadurch gekennzeichnet, dass** die Reinigungsanordnung (40) eine abnehmbare, den drehbaren Kopf (41) tragende, im Garraum (16) in der Wandung (12) des Tiegels (10) befestigbare Lanze (43) aufweist.

4. Gargerät nach Anspruch 3, **dadurch gekennzeichnet, dass** die Lanze (43) werkzeuglos anbringbar und abnehmbar ist, insbesondere mittels eines Drehverschlusses, vorzugsweise eines bajonettartigen Verschlusses.

5. Gargerät nach einem der vorstehenden Ansprüche, **dadurch gekennzeichnet, dass** der drehbare Kopf (41) mit seiner beziehungsweise seinen Düsenöffnungen (42) so aufgebaut und angeordnet ist, dass die mittels der Hochdruckeinrichtung zugeführte strömende Reinigungsflüssigkeit eine mechanische, die Drehung des Kopfes (41) bewirkende Kraft ausübt.

6. Gargerät nach einem der vorstehenden Ansprüche, **dadurch gekennzeichnet, dass** der Kopf (41) in seitlicher Hinsicht mittig vor einer Rückwand (12) angeordnet ist.

7. Gargerät nach einem der vorstehenden Ansprüche, **dadurch gekennzeichnet, dass** der Kopf (41) in der oberen Hälfte des Garraums (16), insbesondere etwa in einem Abstand von einem Sechstel bis einem Drittel der Höhe der Rückwand (12) unterhalb des Deckels (20) angeordnet ist.

8. Gargerät nach einem der vorstehenden Ansprüche, **dadurch gekennzeichnet, dass** der Kopf (41), insbesondere der Orbitalkopf, einen von der oder den Düsen (42) erzeugten Sprühschatten in den Bereich einer Dichtung zwischen der Oberkante des Tiegels (10) und dem Deckel (20) legt, insbesondere im Bereich einer Dichtung zwischen der Oberkante einer Vorderwand (15) und dem Deckel (20).

9. Gargerät nach einem der vorstehenden Ansprüche, **dadurch gekennzeichnet, dass** ein oder mehrere Sensoren im Garraum angeordnet sind, insbesondere optische Sensoren oder eine Kamera.

10. Gargerät nach einem der vorstehenden Ansprüche, **dadurch gekennzeichnet, dass** die Reinigungsanordnung so aufgebaut ist, dass ein Reinigerkonzentrat mittels Injektion oder Kartusche in die Reinigungsanordnung (40) einbringbar ist.

11. Verfahren zum Reinigen des Garraums (16) eines Gargerätes nach einem der vorstehenden Ansprüche, wobei Substanzen auf den Wänden (12, 13, 14, 15), dem Boden (11) und der Innenseite des Deckels (20) mittels eines Flüssigkeitsstrahls unter Hochdruck aus dem Kopf (41) mechanisch abgetragen werden,
**dadurch gekennzeichnet, dass** zusätzlich folgender Schritt durchgeführt wird:
e) Desinfizieren des Garraums (16) im Tiegel (10), insbesondere durch Schließen des Ablaufs (30), anschließendes Einfüllen von Frischwasser, Schließen des evtl. noch offenstehenden Deckels (20), und Aufheizen des Frischwassers im Garraum (16) mittels einer Heizung des Gargerätes.

12. Verfahren nach Anspruch 11, **dadurch gekennzeichnet, dass** vor dem Schritt e) folgende Schritte durchgeführt werden:
a) Anlösen, insbesondere Einsprühen, des Garraums (16) mit einer Flüssigkeit aus dem Kopf (41),
b) Einwirken lassen der Flüssigkeit auf den Wänden (12, 13, 14, 15), dem Boden (11) und der Unterseite des Deckels (20) des Garraums (16),
c) mechanisches Abtragen der Substanzen auf den Wänden (12, 13, 14, 15), dem Boden (11) und der Innenseite des Deckels (20) mittels eines Flüssigkeitsstrahls unter Hochdruck aus dem Kopf (41), und
d) Klarspülen, insbesondere durch Beaufschlagen der Wandungen des Garraumes (16) mit Frischwasser für eine vorgegebene Zeitspanne.

13. Verfahren nach einem der Ansprüche 11, 12 oder 13, **dadurch gekennzeichnet, dass** der gereinigte Garraum (16) getrocknet wird, insbesondere durch Öffnen des Deckels (20) und des Geräteablaufs (30) und Aufheizen des Garraumes (16).

## Claims

1. Cooking appliance
having a cooking chamber (16) in an interior of a pan (10), which has a front wall (15), two side walls (13, 14) and a rear wall (12),
having a closable cover (20),
having a drain (30) from the pan (10), and
having a cleaning arrangement (40) for feeding cleaning fluid into the pan (10),
wherein the cleaning arrangement (40) has a high-pressure device for introducing the cleaning fluid into the pan (10) under high pressure, wherein the cleaning arrangement (40) is guided into the cooking chamber (16) in the interior of the pan (10) through a wall, formed from one of the walls (12, 13, 14, 15), or through the cover (20) or a floor (11) of the pan (10), and the cleaning arrangement (40) has a rotatable head (41) with one or more nozzle openings (42) for the cleaning fluid,
**characterized**
**by** the provision of a motor for driving the rotatable head (41), which motor is preferably arranged in the wall (12) and transmits the drive power, by means of a transmission chain, into the lance (43), which drives the head (41).

2. Cooking appliance according to Claim 1, **characterized in that** the rotatable head (41) with its nozzle opening or openings (42) is designed in the form of an orbital head.

3. Cooking appliance according to Claim 1 or 2, **characterized in that** the cleaning arrangement (40) has a removable lance (43), which bears the rotatable head (41) and can be fastened in the cooking chamber (16), in the wall (12) of the pan (10).

4. Cooking appliance according to Claim 3, **characterized in that** the lance (43) can be fitted and removed without any tools being required, in particular by means of a rotary closure, preferably a bayonet-like closure.

5. Cooking appliance according to one of the preceding claims, **characterized in that** the rotatable head (41) with its nozzle opening or openings (42) is constructed, and arranged, such that the flow of cleaning fluid fed by means of the high-pressure device exerts a mechanical force which causes the head (41) to rotate.

6. Cooking appliance according to one of the preceding claims, **characterized in that** the head (41), in lateral terms, is arranged centrally in front of a rear wall (12).

7. Cooking appliance according to one of the preceding claims, **characterized in that** the head (41) is arranged in the upper half of the cooking chamber (16), in particular approximately at a distance of a sixth to a third of the height of the rear wall (12) beneath the cover (20).

8. Cooking appliance according to one of the preceding claims, **characterized in that** the head (41), in particular the orbital head, casts a spray shadow, generated by the nozzle or nozzles (42), into the region of a seal between the upper edge of the pan (10) and the cover (20), in particular in the region of a seal between the upper edge of a front wall (15) and the cover (20).

9. Cooking appliance according to one of the preceding claims, **characterized in that** one or more sensors, in particular optical sensors or a camera, is/are arranged in the cooking chamber.

10. Cooking appliance according to one of the preceding claims, **characterized in that** the cleaning arrangement is constructed such that a cleaning-agent concentrate can be introduced into the cleaning arrangement (40) by means of injection or a cartridge.

11. Method of cleaning the cooking chamber (16) of a cooking appliance according to one of the preceding claims, wherein substances on the walls (12, 13, 14, 15), the floor (11) and the inner side of the cover (20) are removed mechanically by means of a high-pressure fluid jet from the head (41),
**characterized in that** the following step is carried out in addition:
e) disinfecting the cooking chamber (16) in the pan (10), in particular by the drain (30) being closed, freshwater then being introduced, the possibly still-open cover (20) being closed, and the freshwater being heated up in the cooking chamber (16) by means of a cooking-appliance heater.

12. Method according to Claim 11, **characterized in that**, prior to step (e), the following steps are carried out:
a) solubilizing substances in the cooking chamber (16) by means of a fluid from the head (41), in particular by spraying,
b) allowing the fluid to act on the walls (12, 13, 14, 15), the floor (11) and the underside of the cover (20) of the cooking chamber (16),
c) removing the substances on the walls (12, 13, 14, 15), the floor (11) and the inner side of the cover (20) mechanically by means of a high-pressure fluid jet from the head (41), and
d) rinsing, in particular by virtue of the walls of the cooking chamber (16) being subjected to the action of freshwater for a predetermined period of time.

13. Method according to one of Claims 11, 12 and 13, **characterized in that** the cleaned cooking chamber (16) is dried, in particular by virtue of the cover (20) and the appliance drain (30) being opened and the cooking chamber (16) being heated up.

## Revendications

1. Appareil de cuisson,
Comprenant un compartiment de cuisson (16) dans un espace intérieur d'une cuve (10), qui présente une paroi avant (15), deux parois latérales (13, 14) et une paroi arrière (12),
un couvercle (20) hermétique,
une évacuation (30) de la cuve (10), et
un agencement de nettoyage (40) pour amener du liquide de nettoyage dans la cuve (10),
l'agencement de nettoyage (40) présentant un dispositif à haute pression pour l'injection du liquide de nettoyage sous haute pression dans la cuve (10), l'agencement de nettoyage (40) étant guidé au travers d'une paroi formée de l'une des parois (12, 13, 14, 15), du couvercle (20) ou d'un fond (11) de la cuve (10) dans le compartiment de cuisson (16) à l'intérieur de la cuve (10), et l'agencement de nettoyage (40) présentant une tête rotative (41) pourvue d'un ou de plusieurs orifices de buses (42) pour le liquide de nettoyage,
**caractérisé en ce que**
il est prévu un moteur pour l'entraînement de la tête rotative (41), lequel moteur est disposé de préférence dans la paroi (12) et transmet au moyen d'une chaîne de transmission la force d'entraînement à la lance (43), qui entraîne la tête (41).

2. Appareil de cuisson selon la revendication 1, **caractérisé en ce que** la tête rotative (41), avec son ou ses orifices de buses (42), est réalisée sous forme de tête orbitale.

3. Appareil de cuisson selon l'une des revendications 1 et 2, **caractérisé en ce que** l'agencement de nettoyage (40) présente une lance (43) amovible qui supporte la tête rotative (41) et peut être fixée dans le compartiment de cuisson (16) dans la paroi (12) de la cuve (10).

4. Appareil de cuisson selon la revendication 3, **caractérisé en ce que** la lance (43) peut être montée et démontée sans outil, en particulier au moyen d'un verrouillage demi-tour, de préférence d'un verrouillage à baïonnette.

5. Appareil de cuisson selon l'une des revendications précédentes, **caractérisé en ce que** la tête rotative (41), pourvue de son ou de ses orifices de buses (42), est structurée et disposée de sorte que le liquide de nettoyage s'écoulant au moyen du dispositif à haute pression exerce une force mécanique qui provoque la rotation de la tête (41).

6. Appareil de cuisson selon l'une des revendications précédentes, **caractérisé en ce que** la tête (41) est disposée en vue latérale au centre et en avant d'une paroi arrière (12).

7. Appareil de cuisson selon l'une des revendications précédentes, **caractérisé en ce que** la tête (41) est disposée dans la moitié supérieure du compartiment de cuisson (16), en particulier à une distance d'un sixième à un tiers à peu près de la hauteur de la paroi arrière (12) au-dessous du couvercle (20).

8. Appareil de cuisson selon l'une des revendications précédentes, **caractérisé en ce que** la tête (41), en particulier la tête orbitale, dépose une ombre de pulvérisation générée par la ou les buses (42) dans la zone d'un joint entre le bord supérieur de la cuve (10) et le couvercle (20), en particulier dans la zone d'un joint entre le bord supérieur d'une paroi avant (15) et le couvercle (20).

9. Appareil de cuisson selon l'une des revendications précédentes, **caractérisé en ce qu'**un ou plusieurs capteurs sont disposés dans le compartiment de cuisson, en particulier des capteurs optiques ou un appareil de prise de vues.

10. Appareil de cuisson selon l'une des revendications précédentes, **caractérisé en ce que** l'agencement de nettoyage est structuré de sorte qu'un concentrat de détergent puisse être introduit dans l'agencement de nettoyage (40) par injection ou cartouche.

11. Procédé de nettoyage du compartiment de cuisson (16) d'un appareil de cuisson selon l'une des revendications précédentes, des substances étant enlevées mécaniquement sur les parois (12, 13, 14, 15), le fond (11) et le côté intérieur du couvercle (11) au moyen d'un jet de liquide sous haute pression de la tête (41),
**caractérisé par** la mise en oeuvre de l'étape supplémentaire suivante :
e) désinfection du compartiment de cuisson (16) dans la cuve (10), en particulier par fermeture de l'évacuation (30), remplissage consécutif en eau fraîche, fermeture du couvercle (20) encore éventuellement ouvert, et chauffage de l'eau fraîche dans le compartiment de cuisson (16) au moyen d'un chauffage de l'appareil de cuisson.

12. Procédé selon la revendication 11, **caractérisé par** la mise en oeuvre des étapes suivantes avant l'étape e) :
a) attaque par dissolution, en particulier pulvérisation, du compartiment de cuisson (16) par un liquide de la tête (41),
b) laisser agir du liquide sur les parois (12, 13, 14, 15), le fond (11) et le côté inférieur du couvercle (20) du compartiment de cuisson (16),
c) enlèvement mécanique des substances sur les parois (12, 13, 14, 15), le fond (11) et le côté intérieur du couvercle (20) au moyen d'un jet de liquide sous haute pression de la tête (41), et
d) rinçage, en particulier par sollicitation des parois du compartiment de cuisson (16) en eau fraîche pour une période prédéfinie.

13. Procédé selon l'une des revendications 11, 12 et 13, **caractérisé en ce que** le compartiment de cuisson (16) nettoyé est séché, en particulier par ouverture du couvercle (20) et de l'évacuation (30) de 1"appareil et chauffage du compartiment de cuisson (16).
